# FASCICULE DE BREVET EUROPEEN

(11) **EP 3 430 902 B1**
(45) Date de publication et mention de la délivrance du brevet: **06.01.2021**
(21) Numéro de dépôt: 18020337.4
(22) Date de dépôt: 19.07.2018
(51) Int. Cl.: A01N 1/02, C12M 3/00

(54) **DISPOSITIF DE MAINTIEN EN SURVIE D'UN EXPLANT**
VORRICHTUNG ZUR ÜBERLEBENS-AUFBEWAHRUNG EINES EXPLANTANTS
DEVICE FOR MAINTAINING SURVIVAL OF AN EXPLANT

(30) Priorité: 20.07.2017 FR 1770780
(43) Date de publication de la demande: 23.01.2019
(73) Titulaire: Centre de Recherches Biologiques et d'Expérimentations Cutanées, 91160 Longjumeau (FR)
(72) Inventeur: Lati, Elian, 91160 Longjumeau (FR); Peno-Mazzarino, Laurent, 91160 Longjumeau (FR)
(74) Mandataire: Célanie, Christian

(56) Documents cités:
- US-A- 5 472 876
- US-A1- 2009 017 439
- TROWELL ET AL: "The culture of mature organs in a synthetic medium", EXPERIMENTAL CELL RESEARCH, ELSEVIER, AMSTERDAM, NL, vol. 16, no. 1, 1 janvier 1959 (1959-01-01), pages 118-147, XP024790337, ISSN: 0014-4827, DOI: 10.1016/0014-4827(59)90201-0 [extrait le 1959-01-01]

## Description

Le secteur technique de la présente invention est celui du maintien en survie d'un explant de peau en particulier de peau humaine.

Pour assurer le maintien en survie d'un explant, il est bien connu de déposer celui-ci sur une grille métallique plongeant dans un milieu de culture de manière à ce que le derme y soit au contact et que l'épiderme reste émergé. Le milieu de culture doit bien entendu contenir tous les éléments nutritifs nécessaires au maintien de cette survie. Le dispositif est conservé dans un incubateur thermostaté à 37 °C et dont l'atmosphère est contrôlée à 5% en CO₂. Ce CO₂ permet de contrôler le pH du milieu de culture qui, pour reproduire celui du sang, doit être maintenu entre 7,2 et 7,4. L'atmosphère est saturée en eau (±98%) pour limiter l'évaporation du milieu de culture. Ce dispositif permet de maintenir en vie l'explant pendant une durée d'environ 12 jours. Les produits que l'on souhaite tester, les produits cosmétiques par exemple, sont appliqués en topique selon la dose définie pour les essais prévus afin d'évaluer ses effets sur l'explant.

Toutefois, cette façon de faire comporte certaines limites qui influent sur les résultats des tests effectués des produits cosmétiques qui sont appliqués sur ces explants.

Tout d'abord, l'expiant en général n'est soumis à aucune tension et celle-ci ne peut pas être contrôlée. En effet, la peau d'un donneur est en état de pré-tension participant ainsi aux propriétés visco-élastiques de la peau. On peut facilement observer qu'un explant de petite taille préparé à partir d'un échantillon de peau plus grand se rétracte sur lui-même. Cet effet témoigne de la diminution de la tension de l'explant et de modifie ses propriétés visco-élastiques. Il s'ensuit que les résultats des tests de produits raffermissants sont biaisés par rapport à des essais en conditions réelles.

Une autre limite réside dans le fait que l'explant n'est pas disposé dans un environnement réel. En effet, l'explant est placé dans un incubateur dans les conditions exposées ci-dessus. Or, ces conditions sont nécessaires pour le maintien en vie du derme irrigué par le sang, et en conditions normales, l'épiderme est au contact de l'air environnant et est sujet aux variations de température et d'hygrométrie.

Une autre limite réside dans l'appauvrissement du milieu nutritif en éléments essentiels à la survie de l'expiant. On remplace régulièrement le milieu de culture. Mais, ce remplacement ponctuel présente l'inconvénient de laisser subsister les déchets produits par l'explant au cours de sa survie car les cellules sécrètent des marqueurs de dégradation qui peuvent être captés par d'autres cellules et entraînent leur apoptose, processus par lequel les cellules déclenchent leur autodestruction en réponse à un signal.

Le document O.A. TROWEL du 1/01/1959 publié dans la Revue Experimental Cell Research, Elsevier, décrit une méthode et des compositions pour la culture d'organes de rat. Les cultures sont placées dans des réservoirs contenant divers milieux nutritifs. Chaque réservoir est clos et isolé. Il n'y a pas de circulation de fluide mis en place pour renouveler le milieu nutritif. Ce document propose bien de renouveler le milieu nutritif mais manuellement par petites quantités et non pas dans une installation en continu.

Il s'avère donc nécessaire de disposer des explants reproduisant le plus possible les conditions normales d'exposition de la peau.

Le but de la présente invention est de fournir un dispositif de maintien en survie de la peau en surmontant les limites évoquées précédemment en assurant la pré-tension de la peau, l'exposition de l'épiderme à une atmosphère normale et le renouvellement du milieu de culture.

L'invention a donc pour objet un dispositif de maintien en survie d'un explant de peau, caractérisé en ce qu'il est constitué d'un premier réservoir de réception de l'explant et contenant une première fraction d'un milieu de culture, un second réservoir contenant une seconde fraction dudit milieu de culture, et un circuit de liaison reliant le premier réservoir au second réservoir pour assurer à l'aide d'une pompe une circulation en continu du milieu de culture entre les deux réservoirs, le premier réservoir étant constitué d'un corps tubulaire fermé par l'explant et le débit de la pompe étant compris entre 0,01 et 10 ml/mn, de sorte que la pression engendrée par la pompe correspond à la pression de mise en tension naturelle de la peau.

Selon une caractéristique du dispositif selon l'invention, le premier réservoir est fermé de manière étanche.

Selon une autre caractéristique du dispositif selon l'invention, le circuit de liaison est constitué de deux tubulures reliant le premier réservoir au second réservoir, ladite pompe étant connectée à l'une des tubulures.

Selon une autre caractéristique du dispositif selon l'invention, la pompe injecte ou aspire le contenu du second réservoir dans le premier réservoir.

La pompe est une pompe péristatique.

Avantageusement, une grille métallique, en matière plastique ou en matériau biocompatible est interposée entre l'expiant et la première fraction du milieu nutritif.

Selon une autre caractéristique du dispositif selon l'invention, la seconde fraction du milieu nutritif est maintenue à une température de 37 °C et à 5% de CO₂ sous atmosphère saturée en vapeur d'eau.

Un tout premier avantage du dispositif selon l'invention réside dans la conservation d'un explant de peau dans des conditions quasi identiques à celles auxquelles la peau est soumise en conditions réelles.

Un autre avantage du dispositif selon l'invention réside dans l'élimination des déchets produits par l'explant pendant sa durée de vie.

Un autre avantage encore du dispositif selon l'invention réside dans la conduite d'essais de produits cosmétiques dans les conditions normales d'application.

La surface de la peau et plus particulièrement le stratum corneum n'est pas hyperhydraté comme il peut l'être dans un incubateur en atmosphère saturée en eau. Le stratum corneum est maintenu hors de l'incubateur avec un état d'hydratation normal.

D'autres caractéristiques, détails et avantages de l'invention seront mieux compris à la lecture du complément de description qui va suivre de modes de réalisation donnés à titre d'exemple en relation avec des dessins sur lesquels :
- la figure 1 est une représentation schématique du dispositif selon l'invention, et
- la figure 2 est une coupe d'un exemple de réalisation du réservoir de réception de l'explant.

Comme indiqué précédemment, il s'agit de mettre au point un dispositif de maintien en survie d'explant de peau, humaine par exemple, en assurant sa viabilité pendant une durée minimale, par exemple de l'ordre de 12 jours en reproduisant les conditions de vie réelle de la peau d'un patient. Il s'agit alors de répondre aux besoins des fabricants de produits cosmétiques par exemple en fiabilisant les tests effectués et permettant leur reproductibilité.

L'invention va maintenant être décrite avec plus de détails.

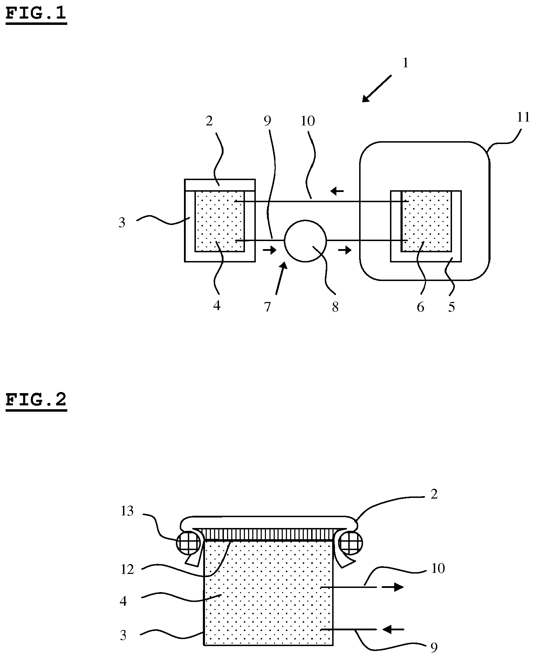

Sur la figure 1, on a représenté le dispositif 1 selon l'invention permettant le maintien en survie d'un explant 2 de peau. Ce dispositif est constitué d'un premier réservoir 3 de réception de l'explant 2 contenant une première fraction 4 d'un milieu de culture, un second réservoir 5 contenant une seconde fraction 6 dudit milieu de culture. Ces deux réservoirs sont en relation avec un circuit de liaison 7 permettant leur communication pour assurer à l'aide d'une pompe 8 une circulation en continu du milieu de culture entre ces deux réservoirs.

Bien entendu, le réservoir 3 est fermé de manière étanche, le réservoir 3 par l'explant 2 lui-même tandis que le réservoir 5 est disposé dans l'enceinte confinée 11. Le réservoir 3 constitue un milieu incubateur pour l'explant et le réservoir 5 un milieu de renouvellement des éléments nutritifs de l'ensemble du dispositif. Il va de soi que le volume des deux réservoirs 3 et 5 n'est pas représentatif sur la figure. A titre indicatif, la fraction 4 contenue dans le réservoir 3 peut être de l'ordre de quelques millilitres, par exemple de 3 à 5 ml, tandis la fraction 6 contenue dans le réservoir 5 peut être de plusieurs millilitres, par exemple 5 à 50 millilitres. Le réservoir 5 dans l'incubateur n'est pas fermé de manière étanche. Le milieu de culture doit pouvoir s'oxygéner en dissolvant l'O₂ de l'air ambiant et réguler le pH en dissolvant le CO₂ délivré par l'incubateur.

Le circuit de liaison 7 est constitué de deux tubulures 9 et 10 reliant le premier réservoir 3 au second réservoir 5. Sur la figure, on voit que la pompe 8 est connectée à la tubulure 9. Lors du fonctionnement, la pompe 8 injecte le contenu du second réservoir 5 dans le premier réservoir 3 par la tubulure 9. Les flèches figurant sur la figure matérialisent le sens de circulation du milieu nutritif. Le circuit 7 étant en boucle fermée et le réservoir 3 étant étanche, il s'ensuit que la fraction 4 de milieu nutritif présente dans ce réservoir est extraite et dirigée en continu par la tubulure 10 vers le réservoir 5. Ainsi, la pompe 8 assure un renouvellement continu et constant de la fraction 4 du milieu nutritif en éliminant une partie des déchets produits par l'explant.

Il va de soi que la pompe 8 peut être utilisée en aspiration et la circulation du fluide s'effectue en sens inverse de celui indiqué par les flèches sur la figure.

Comme cela a été exposé précédemment, le dispositif selon l'invention reproduit les conditions de tension de la peau au niveau de l'explant 2. Cette tension est fonction du débit de la pompe 8. Ainsi, avec un débit compris entre 0,01 et 10 ml/mn, on reproduit au plus près les conditions de tension de la peau en conditions réelles et on évite toute déformation de l'explant. Ce débit présente l'avantage de ne pas exercer de pression sur la peau qui pourrait la faire gonfler en se bombant.

Avantageusement, la pompe 8 est du type péristatique.

Le dispositif selon l'invention permet d'éliminer une grande partie des déchets produits par l'explant 2 en les diluant dans la fraction contenue dans le réservoir 5. De plus, la fraction 6 de milieu nutritif contenue dans le réservoir 5 disposé dans l'enceinte 11 est soumise à une atmosphère reproduisant les conditions normales dans lesquelles se trouve la peau à savoir une température de 37 °C, 5% de CO₂ et saturation en vapeur d'eau. En conséquence, l'explant 2 est soumis à ces mêmes conditions.

Il va de soi que la fraction 6 de milieu nutritif est contrôlée afin d'y éviter une trop grande accumulation de déchets. C'est pourquoi la fraction 6 est renouvelée avec une fréquence définie laissant l'explant de peau modifier selon ses besoins le milieu nutritif en évitant l'accumulation des déchets pouvant être toxiques. Le renouvellement de cette fraction 6 ne présente aucune difficulté car il suffit d'intervenir au niveau de l'enceinte 11 sans effet prolongé sur la fraction 4 du réservoir 3.

On notera que la circulation continue du milieu nutritif de culture assure l'oxygénation de l'explant de peau 2, l'apport en nutriments et participe à la régulation thermique. Enfin, les cellules mortes ne posent aucun problème.

Sur la figure 2, on a représenté un exemple de réalisation du premier réservoir 3 de réception de l'échantillon permettant la mise sous tension de l'explant. On voit que ce réservoir 3 est constitué d'un corps tubulaire fermé par l'explant 2 et qu'une grille 12 métallique, en matière plastique ou en matériau biocompatible est interposée entre l'explant 2 et la première fraction 4 du milieu nutritif. Le derme est ainsi en contact permanent avec le milieu nutritif. L'explant 2 est précontraint manuellement en l'appliquant sur le bord libre du réservoir en étant rabattu sur sa paroi latérale où il est maintenu à l'aide d'un joint annulaire 13.

Dans cette configuration, l'explant 2 présente une surface parfaitement plane de réception du produit à tester et présente les qualités requise de fermeté et d'élasticité.

On voit que l'invention permet l'application des produits cosmétiques selon la posologie définie par le client pour évaluer ses effets sur l'explant dont les caractéristiques sont celles du milieu réel. Les explants peuvent être préparés en fonction des besoins de l'étude : taille, phototype, âge, sexe ou encore la structure conservée (épiderme et derme ou épiderme, derme et hypoderme) en reproduisant les conditions du milieu réel.

Le contrôle des paramètres cutométriques de l'explant par un cutomètre ne présente aucune difficulté en raison de l'accessibilité de l'explant.

## Revendications

1. Dispositif de maintien en survie (1) d'un explant de peau (2), **caractérisé en ce qu'**il est constitué d'un premier réservoir (3) de réception de l'expiant (2) et contenant une première fraction (4) d'un milieu de culture, un second réservoir (5) contenant une seconde fraction (6) dudit milieu de culture, et un circuit de liaison (7) reliant le premier réservoir (3) au second réservoir (5) pour assurer à l'aide d'une pompe (8) une circulation en continu du milieu de culture entre les deux réservoirs, le premier réservoir (3) étant constitué d'un corps tubulaire fermé par l'expiant (2) et le débit de la pompe (8) étant compris entre 0,01 et 10 ml/mn, de sorte que la pression engendrée par la pompe (8) correspond à la pression de mise en tension naturelle de la peau.

2. Dispositif de maintien en survie (1) selon la revendication 1, **caractérisé en ce que** le premier réservoir (3) est fermé de manière étanche.

3. Dispositif de maintien en survie (1) selon la revendication 1 ou 2, **caractérisé en ce que** le circuit de liaison (7) est constitué de deux tubulures (9, 10) reliant le premier réservoir (3) au second réservoir (5), ladite pompe (8) étant connectée à l'une des tubulures (9).

4. Dispositif de maintien en survie (1) selon l'un des revendications 1 à 3, **caractérisé en ce que** la pompe (8) injecte ou aspire le contenu du second réservoir (5) dans le premier réservoir (3).

5. Dispositif de maintien en survie (1) selon la revendication 4, **caractérisé en ce que** la pompe (8) est une pompe péristaltique.

6. Dispositif de maintien en survie (1) selon la revendication 1, **caractérisé en ce qu'**une grille (12) métallique, en matière plastique ou en matériau biocompatible, est interposée entre l'explant (2) et la première fraction (4) du milieu nutritif.

7. Dispositif de maintien en survie (1) selon la revendication 1, **caractérisé en ce que** la seconde fraction (6) du milieu nutritif est maintenue à une température de 37°C et à 5% de CO₂ sous atmosphère saturée en vapeur d'eau.

## Patentansprüche

1. Vorrichtung zur Aufrechterhaltung des Fortlebens (1) eines Hautexplantats (2), **dadurch gekennzeichnet, dass** sie aus einem ersten Behälter (3) zur Aufnahme des Explantats (2) und welcher einen ersten Anteil (4) eines Kulturmediums enthält, einem zweiten Behälter (5), welcher einen zweiten Anteil (6) des sogenannten Kulturmediums enthält, und einem Verbindungskreislauf (7) gebildet wird, welcher den ersten Behälter (3) mit dem zweiten Behälter (5) verbindet, um mit Hilfe einer Pumpe (8) eine kontinuierliche Zirkulation des Kulturmediums zwischen den beiden Behältern zu gewährleisten, wobei der erste Behälter (3) aus einem durch das Explantat (2) geschlossenen rohrförmigen Körper gebildet wird und der Durchfluss der Pumpe (8) zwischen 0,01 und 10 ml/Min liegt, so dass der durch die Pumpe (8) erzeugte Druck dem natürlichen Spanndruck der Haut entspricht.

2. Vorrichtung zur Aufrechterhaltung des Fortlebens (1) nach Anspruch 1, **dadurch gekennzeichnet, dass** der erste Behälter (3) in abdichtender Weise geschlossen ist.

3. Vorrichtung zur Aufrechterhaltung des Fortlebens (1) nach Anspruch 1 oder 2, **dadurch gekennzeichnet, dass** der Verbindungskreislauf (7) aus zwei Rohren (9, 10) gebildet wird, welche den ersten Behälter (3) mit dem zweiten Behälter (5) verbinden, wobei die sogenannte Pumpe (8) an eines der Rohre (9) angeschlossen ist.

4. Vorrichtung zur Aufrechterhaltung des Fortlebens (1) nach einem der Ansprüche 1 bis 3, **dadurch gekennzeichnet, dass** die Pumpe (8) den Inhalt des zweiten Behälters (5) in den ersten Behälter (3) einspritzt oder einsaugt.

5. Vorrichtung zur Aufrechterhaltung des Fortlebens (1) nach Anspruch 4, **dadurch gekennzeichnet, dass** die Pumpe (8) eine peristaltische Pumpe ist.

6. Vorrichtung zur Aufrechterhaltung des Fortlebens (1) nach Anspruch 1, **dadurch gekennzeichnet, dass** ein Gitter (12) aus Metall, Kunststoff oder biokompatiblem Material zwischen das Explantat (2) und den ersten Anteil (4) des Nährmediums eingesetzt ist.

7. Vorrichtung zur Aufrechterhaltung des Fortlebens (1) nach Anspruch 1, **dadurch gekennzeichnet, dass** der zweite Anteil (6) des Nährmediums auf einer Temperatur von 37°C und bei 5% CO₂ in einer mit Wasserdampf gesättigten Atmosphäre gehalten wird.

## Claims

1. A device (1) to ensure the survival of a skin explant (2), wherein it is constituted by a first container (3) to receive the explant and containing a first fraction (4) of a growth medium, a second container (5) containing a second fraction (6) of said growth medium, and a linking circuit (7) connecting the first container (3) to the second container (5) to ensure by means of a pump (8) a continuous circulation of the growth medium between the two containers, the first container (3) being formed of a tubular body closed by the explant (2) and the flow rate of the pump (8) being of between 0.01 and 10 ml/mn, such that the pressure generated by the pump (8) corresponds to the natural tightening of the skin.

2. A skin explant survival device (1) according to Claim 2, wherein the first container (3) is closed and sealed.

3. A skin explant survival device (1) according to Claims 1 or 2, wherein the linking circuit (7) is constituted by two tubes (9, 10) linking the first container (3) to the second container (5), said pump (8) being connected to one of these tubes (9).

4. A skin explant survival device (1) according to one of Claims 1 to 3, wherein the pump (8) injects or draws the content of the second container (5) into/out of the first container (3).

5. A skin explant survival device (1) according to Claim 4, wherein the pump (8) is a peristaltic pump.

6. A skin explant survival device (1) according to Claim 1, wherein a grid (12) made of a metallic, plastic or biocompatible material is positioned between the explant (2) and the first fraction (4) of the nutritive medium.

7. A skin explant survival device (1) according to Claim 1, wherein the second fraction (6) of the nutritive medium is kept at a temperature of 37°C and at a CO2 level of 2% in a water-vapour saturated atmosphere.
